Europäisches Patentamt

European Patent Office

Office européen des brevets

(19)

(11) Veröffentlichungsnummer: **0 395 843**

**A2**

(12) # EUROPÄISCHE PATENTANMELDUNG

(21) Anmeldenummer: **90102888.6**

(22) Anmeldetag: **14.02.90**

(51) Int. Cl.⁵: **A47J  31/24**

(30) Priorität: **03.05.89 DE 3914683**

(43) Veröffentlichungstag der Anmeldung:
**07.11.90 Patentblatt  90/45**

(84) Benannte Vertragsstaaten:
**AT CH DE ES FR GB IT LI NL SE**

(71) Anmelder: **WMF WÜRTTEMBERGISCHE METALLWARENFABRIK AG**
**Postfach 14 01**
**D-7340 Geislingen/Steige(DE)**

(72) Erfinder: **Buchmann, Richard, Dr.-Ing.**
**Dipl.-Phys.**
**Frauenbergstrasse 14**
**D-7347 Bad Überkingen(DE)**

(74) Vertreter: **Patentanwälte Grünecker,**
**Kinkeldey, Stockmair & Partner**
**Maximilianstrasse 58**
**D-8000 München 22(DE)**

(54) **Maschine zum Bereiten von Heissgetränken.**

(57) Wenn bei bekannten Kaffee- und Teemaschinen zusätzlich Dampf für die Bereitung von Grog oder dergleichen bzw. zum Aufschäumen von Milch erzeugt werden soll, wird dafür entweder ein Überdruck-Dampfkessel oder ein Durchlauferhitzer eingesetzt. Überdruckkessel erfordern jedoch umfangreiche Sicherheitsvorkehrungen, während Durchlauferhitzer einen hohen Leistungsbedarf aufweisen.

In beiden Systemen ist der Kalk relativ schwer zu entfernen. Zur Vermeidung dieser Nachteile wird die Verwendung eines Dampferzeugers (13) vorgeschlagen, bei dem das Kaltwasser durch eine Einspritzeinrichtung (21) zum Verdampfen in eine Dampfkammer (20) und dort gegen einen beheizbaren Wärmespeicher (18) gespritzt wird.

FIG.2

EP 0 395 843 A2

# Maschine zum Bereiten von Heißgetränken

Die Erfindung bezieht sich auf eine Maschine zum Bereiten von Heißgetränken, wie Kaffee-, Tee, oder Milch, der im Oberbegriff von Anspruch 1 erläuterten Art.

Herkömmliche Kaffeemaschinen sind häufig mit einer Dampfausgabeleitung versehen, die nach Bedarf entweder zum Erwärmen eines Glases Wasser zur Bereitung von Tee oder zum Aufschäumen von Milch zur Bereitung von Cappuccino dient. Zur Dampfbereitung werden in herkömmlichen Kaffeemaschinen oder auch in gesonderten Milcherhitzern für Imbißstuben entweder Dampfkessel oder Durchlauferhitzer verwendet. Dampfkessel müssen jedoch den äußerst strengen Sicherheitsvorschriften genügen und sind deshalb relativ teuer. Durchlauferhitzer benötigen hingegen vergleichsweise viel Leistung. Beiden Systemen gemeinsam ist das Problem der Verkalkung durch stark kalkhaltiges Leitungswasser. Sowohl der Dampfkessel als auch der Durchlauferhitzer müssen somit von Zeit zu Zeit entkalkt werden, wozu die gesamte Maschine stillgelegt und äußerst umsichtig vorgegangen werden muß, damit Reste der agressiven Entkalkungschemikalien nicht in der Maschine verbleiben.

Der Erfindung liegt somit die Aufgabe zugrunde, eine Maschine zum Bereiten von Heißgetränken bereitzustellen, die einfach in der Konstruktion und wartungsfreundlich ist und die einen relativ geringen Leistungsbedarf aufweist.

Die Aufgabe wird durch die kennzeichnenden Merkmale des Hauptanspruches gelöst.

Mit der erfindungsgemäßen Maschine kann die gewünschte Menge Dampf mit einem relativ geringen Leistungseinsatz erzeugt werden. So wird beispielsweise beim erfindungsgemäßen Dampferzeuger für eine Dampfmenge von 1 g/Sek. und ED 25 % ca. 650 Watt benötigt. Zum Vergleich benötigt ein Durchlauferhitzer für die gleiche Menge Dampf pro Sek. ca. 2,6 Kilowatt. Da bei jedem Aufspritzen des Wassers auf den Wärmespeicher diesem kurzzeitig Energie entzogen wird, bevor er sich wieder auf die benötigte Temperatur aufheizt, sind die Kalkablagerungen auf dem Wärmespeicher einer laufenden Temperaturwechselbeanspruchung ausgesetzt, die zum Abplatzen der Kalkschichten führt. Der erfindungsgemäße Dampferzeuger muß somit nicht chemisch entkalkt werden. Die Dampfkammer muß nicht als Überdruckkammer ausgebildet werden, so daß die für Dampfkessel notwendigen Sicherheitsvorkehrungen nicht erforderlich sind.

Das Einspritzen von Wasser gegen eine beheizte Wandung der Dampfkammer gemäß Anspruch 2 stellt eine besonders einfache und wirksame konstruktive Ausgestaltung dar. Durch die Ausgestaltung nach Anspruch 3 kann die Einspritzeinrichtung, solange sie nicht gebraucht wird, in einen relativ kalten Bereich zurückgezogen werden, so daß eine zum Einspritzen verwendete Düse nicht verkalken kann.

Durch die Ausgestaltung nach den Ansprüchen 4 und 5 wird die Düse durch den Druck des Wassers selbsttätig in die Einspritzstellung bewegt.

Die Ausgestaltung nach Anspruch 6 sorgt dafür, daß die Düse z.B. nach dem Abstellen des Wassers selbsttätig aus der Einspritzstellung zurückgezogen wird.

Die Merkmale nach Anspruch 7 dienen der weiteren Isolierung der Einspritzeinrichtung von der heißen Dampfkammer.

Noch weiter verbessert wird sowohl die Isolierung als auch der Druckaufbau im Inneren der Dampfkammer, wenn die Öffnung gemäß Anspruch 8 durch eine Dichtung verschlossen wird.

Die Ausgestaltung der Dichtung gemäß Anspruch 9 ist konstruktiv besonders einfach sowie zweckmäßig und zuverlässig in der Funktion, da sie leicht von der Düse zu öffnen ist, sich unmittelbar hinter der Düse wieder schließt und darüberhinaus in Einspritzstellung den Spalt zwischen der Düse und der Wandung der Dampfkammer abdichtet.

Durch die Ausgestaltung nach Anspruch 10 können die abgeplatzten Kalkschichten aus der Dampfkammer entfernt werden, ohne daß die gesamte Kaffeemaschine stillgesetzt werden muß.

Noch einfacher wird die Entfernung der Kalkschichten durch den gemäß Anspruch 11 vorgesehenen Auffangbehälter.

Wird eine weitere Erhitzung des Dampfes zum Bereiten von Heißdampf gewünscht, so kann gemäß Anspruch 12 ein zusätzlicher Wärmetauscher vorgesehen werden.

Dieser zusätzliche Wärmetauscher kann gemäß Anspruch 13 auf konstruktiv einfache Weise auch von der Heizung des Wärmespeichers beheizt werden.

Durch die Ausgestaltung nach Anspruch 14 wird ein Wassernebel erzeugt, so daß der sogenannte "Leidenfrost"-Effekt weitgehend umgangen wird.

Ein Ausführungsbeispiel der Erfindung wird nachfolgend anhand der Zeichnungen näher erläutert. Es zeigen:

Fig. 1 eine schematische Darstellung einer erfindungsgemäß ausgerüsteten Kaffeemaschine, und

Fig. 2 eine vergrößerte Darstellung eines Dampferzeugers im Schnitt.

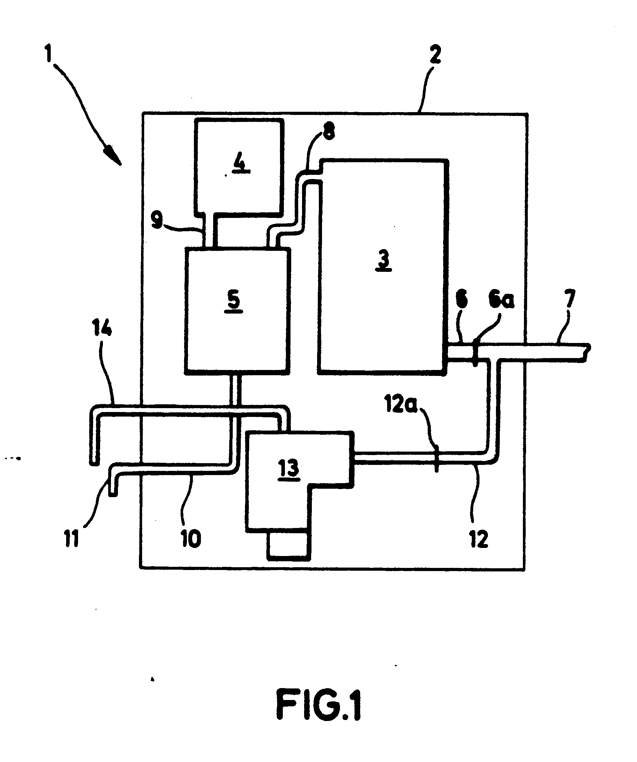

Aus Fig. 1 ist in schematischer Darstellung eine Kaffee- und Teemaschine 1 ersichtlich, die in üblicher Weise einen innerhalb eines Gehäuses 2 angeordneten Heißwasserbereiter 3, einen Kaffeemehlbehälter 4 und eine Brüheinheit 5 enthält. Der Heißwasserbereiter 3 ist als Boiler ausgebildet und steht über eine Zufuhrleitung 6 mit einem Absperrventil 6a mit einer Kaltwasserleitung 7 in Verbindung. Zwischen dem Heißwasserbereiter 3 und der Brüheinheit 5 ist eine Heißwasserleitung 8 und zwischen dem Kaffeemehlbehälter 4 und der Brüheinheit 5 ein Kaffeemehl-Einfüllstutzen 9 vorgesehen. Die Brüheinheit 5 mündet über eine Kaffeeausgabeleitung 10 in einen Auslauf 11 außerhalb der Maschine.

Die Kaltwasserleitung 7 ist vor dem Ventil 6a mit einer Kaltwasser-Zufuhrleitung 12 verbunden, die ebenfalls ein Ventil 12a enthält. Die Zufuhrleitung 12 mündet in einen Dampferzeuger 13, von dem eine Dampfausgabeleitung 14 nach außerhalb der Maschine wegführt.

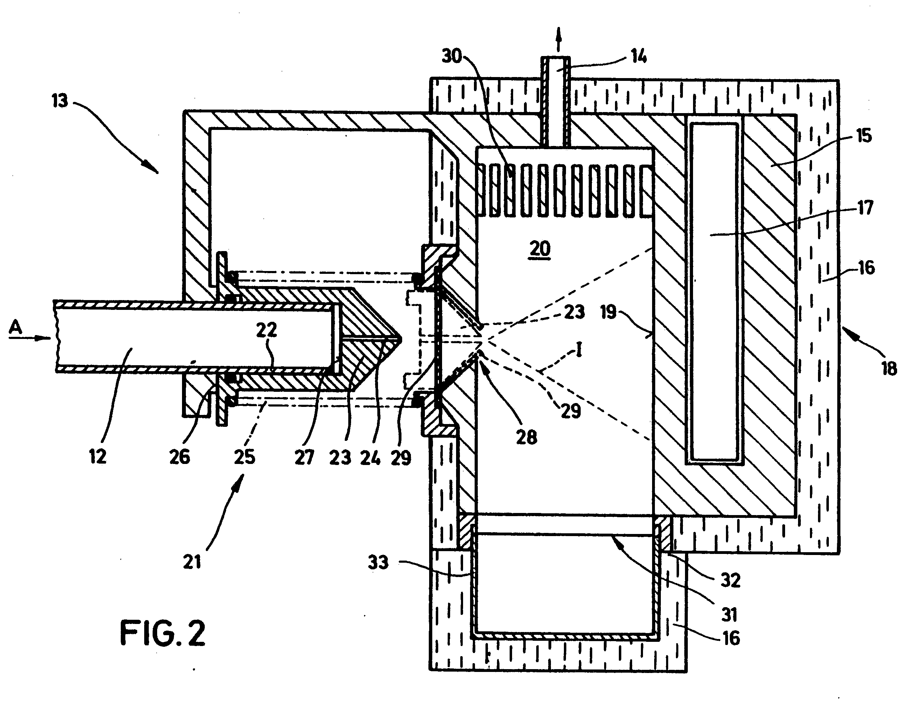

Wie in Fig. 2 näher dargestellt, enthält der Dampferzeuger 13 ein dickwandiges Gehäuse 15 aus gut wärmeleitendem Material, das an seiner Außenseite mit einer Isolierung 16 umgeben ist. Eine der senkrechten Wände des Gehäuses 15 weist eine besonders große Wanddicke auf und enthält eine in einer Ausnehmung untergebrachte Heizung 17. Die Heizung 17 heizt das Material der Wandung des Gehäuses 15 auf und bildet mit diesem einen Wärmespeicher 18, der mit einer seiner senkrechten Oberflächen 19 an einer vom Gehäuse 15 umschlossenen Dampfkammer 20 anliegt.

An der der Oberfläche 19 gegenüberliegenden Seite der Dampfkammer 20 ist eine Einspritzeinrichtung 21 angeordnet. In die Einspritzeinrichtung 21 mündet ein freies Ende 22 der Kaltwasser-Zufuhrleitung 12. Auf dem freien Ende 22 ist eine Düse 23 gleitend verschiebbar. Die Düse 23 enthält eine axial mit dem freien Ende 22 ausgerichtete Düsenöffnung 24, die mittig in einer konisch zulaufenden Spitze der Düse 23 angeordnet ist. Die Düsenöffnung 24 ist in ihrer Querschnittsfläche und Form derart an den zu erwartenden Wasserdruck angepaßt, daß das Wasser in Form feinverteilter, schneller Tröpfchen (Nebel) austritt. Auf diese Weise wird das "Leidenfrost"-Phänomen weitgehend umgangen. Die Düse 23 wird durch eine sich am Gehäuse 15 abstützende Feder 25 gegen einen Anschlag 26 gedrückt und im Abstand vom Gehäuse 15 gehalten. Im Inneren der Düse 23 ist eine senkrecht zum freien Ende 22 verlaufende, die Düsenöffnung 24 umgebende Prallfläche 27 für das in Richtung des Pfeiles A einströmende Kaltwasser ausgebildet. Axial ausgerichtet zum freien Ende 22 und zur Düsenöffnung 24 ist in der Wandung der Dampfkammer 20 eine Öffnung 28 vorgesehen, die sich mit einem dem Neigungswinkel der konischen Spitze der Düse 23 korrespondierenden Neigungswinkel in Richtung auf die Dampfkammer 20 verengt. Die äußere, größere Weite der Öffnung 28 wird durch einen peripher befestigten Vorhang 29 aus elastischem Material überspannt. Der Vorhang 29 ist mit einer Mehrzahl sich in der Mitte und in axialer Ausrichtung zur Düsenöffnung 24 kreuzenden Schnitten versehen.

An der Oberseite der Dampfkammer 20, vor der Ausmündung der Dampfausgabeleitung 14, ist ein zusätzlicher Wärmetauscher 30 vorgesehen, der aus mit der Wandung 15 und somit der Heizung 17 in wärmeübertragendem Kontakt stehenden Rippen gebildet wird.

Unterhalb der Oberfläche 19 ist in dem Gehäuse 15 eine Öffnung 31 vorgesehen, die von einem Bajonettverschluß 32 umgeben ist. In den Bajonettverschluß 32 wird ein ebenfalls mit einer Isolierung 16 versehenes Auffanggefäß 33 eingeschraubt.

Die erfindungsgemäße Maschine arbeitet wie folgt: Während des Betriebes und in Bereitschaftsstellung des Dampferzeugers 13 ist die Heizung 17 eingeschaltet und hält, zweckmäßigerweise durch Thermostaten oder dergleichen gesteuert, die Oberfläche 19 auf einer konstanten Temperatur zwischen 250 und 300° C. Wird ein Dampfstoß gewünscht, so wird das Ventil 12a in der Kaltwasser-Zufuhrleitung 12 geöffnet, so daß Kaltwasser mit Leitungsdruck in Richtung des Pfeiles A in das freie Ende 22 der Zufuhrleitung 12 einströmt. Dort prallt das Kaltwasser auf die Prallfläche 27 der Düse 23 und schiebt diese gegen die Kraft der Feder 25 in Richtung auf die Dampfkammer 20 in die gestrichelt gezeichnete Stellung vor. Trifft die Spitze der Düse 23 auf den Vorhang 29, so klafft der geschlitzte Vorhang auf und gibt einen Bereich um die Düsenöffnung 24 frei, so daß das Kaltwasser innerhalb des gestrichelt gezeichneten Kegels I versprüht wird und auf die heiße, als Aufprallfläche ausgebildete Oberfläche 19 aufprallen kann. Hinreichend kleine, schnelle Tröpfchen werden dort vollständig verdampft, ohne daß sich eine schützende Dampfschicht über einen Restwasserkern ausbilden kann, die die weitere Verdampfung erschwert. Gleichzeitig wird der Konus der Düse 23 gegen den entsprechenden Konus der Öffnung 28 gepreßt, wobei zwischen Düse 23 und Öffnung 28 der Vorhang 29 eingeklemmt wird, so daß eine ausreichende Abdichtung zwischen Düse 23 und Gehäuse 15 erzielt wird. Damit wird der Dampf durch den sich erhöhenden Druck in der Dampfkammer 20 durch die Dampfausgabeleitung 14 gedrückt, wobei er beim Durchströmen des zusätzlichen Wärmetauschers 13 noch weiter erhitzt wird.

Wird kein Dampf mehr benötigt, so wird das Ventil 12a geschlossen und somit die Druckbeaufschlagung der Prallfläche 27 beendet. Die Feder 25 zieht die Düse 23 aus der Öffnung 28 zurück und drückt sie gegen den Anschlag 26. Dadurch wird auch die Dampfkammer 20 belüftet, so daß kein Getränk durch die Dampfausgabeleitung 14 rückgesaugt werden kann. Der Vorhang 29 schließt sich wieder und isoliert die Düse 23 von der durch den Wärmespeicher 18 auf Temperatur gehaltenen Dampfkammer 20, so daß die Düse relativ geringen Temperaturbelastungen ausgesetzt ist.

Bei kalkhaltigem Wasser lagern sich die beim Verdampfen ausfallenden Mineralsalze in einer dünnen Schicht an der Oberfläche 19 ab. Wird dann jedoch ein neuer Dampferzeugungsvorgang ausgelöst, so wird der Oberfläche 19 durch das aufprallende Kaltwasser die zum Verdampfen notwendige Energie entzogen, so daß sich die Oberfläche 19 kurzzeitig abkühlt. Die durch dieses Abkühlen und die nachfolgende Wiedererhitzung bewirkten Temperaturschwankungen an der Oberfläche 19 reichen aus, den dünnen Kalkbelag abplatzen zu lassen. Die Reste fallen nach unten durch die Öffnung 31 in den Auffangbehälter 33, wo sie durch Abschrauben des Auffangbehälters 33 leicht entfernt werden können. Dagegen befindet sich die Düse 23 über den Großteil ihres Betriebs in einer relativ kühlen Umgebung, so daß die Gefahr einer Verkalkung der Düse nicht besteht.

In Abwandlung des beschriebenen und gezeichneten Ausführungsbeispieles kann der erfindungsgemäße Dampferzeuger auch für andere Maschinen zur Bereitung von Heißgetränken, wie z.B. Milcherhitzer, oder für nach anderen Prinzipien arbeitenden Kaffee- oder Teemaschinen verwendet werden. Er muß nicht unbedingt in das Gehäuse der Maschine integriert sein, sondern kann als gesondertes Bauteil, gegebenenfalls sogar mit eigenem Wasserzulauf ausgebildet sein. Je nach den Gegebenheiten kann der Dampferzeuger auch mit bereits angewärmtem bzw. heißem Wasser arbeiten. Der Wärmespeicher kann aus einem festen Block oder aus einem mit einem Wärmeträger gefüllten Hohlkörper bestehen. Der Wärmespeicher kann auch als gesondertes Bauteil ausgebildet und gegebenenfalls lösbar in die Dampfkammer eingesetzt werden. Die Düse kann fest in der Wandung installiert sein und/oder mit einer Beschichtung versehen werden, an der sich Kalkablagerungen schlecht festsetzen können. Auch die Verwendung anderer Einrichtungen zum Versprühen von Wasser ist denkbar. Schließlich kann die Düse durch einen gesonderten Antrieb oder z.B. durch einen vom Wasserdruck beaufschlagten Zylinder in die Einspritzstellung bewegt werden.

## Ansprüche

1. Maschine zum Bereiten von Heißgetränken, wie Kaffee, Tee oder Milch, mit einer Wasserleitung (12), einem Dampferzeuger (13) und einer Dampfausgabeleitung (14), **dadurch gekennzeichnet,** daß der Dampferzeuger (13) eine mit der Dampfausgabeleitung (14) verbundene Dampfkammer (20), einen in der Dampfkammer (20) angeordneten, beheizbaren Wärmespeicher (18) und eine mit der Wasserleitung (12) verbundene Einspritzeinrichtung (21) zum Einspritzen von Wasser gegen den Wärmespeicher (18) enthält.

2. Maschine nach Anspruch 1, **dadurch gekennzeichnet,** daß der Wärmespeicher (18) eine der Einspritzeinrichtung (21) gegenüberliegende, als Aufprallwand aus wärmespeicherndem Material ausgebildete Oberfläche (19) der Dampfkammer (20) umfaßt.

3. Maschine nach Anspruch 1 oder 2, **dadurch gekennzeichnet,** daß die Einspritzeinrichtung (21) eine in eine und aus einer Einspritzstellung bewegbare Düse (23) enthält.

4. Maschine nach Anspruch 3, **dadurch gekennzeichnet,** daß die Düse (23) vom Druck des Wassers bewegbar ist.

5. Maschine nach Anspruch 4, **dadurch gekennzeichnet,** daß die Düse (23) eine Prallfläche (27) für das Wasser enthält.

6. Maschine nach einem der Ansprüche 3 bis 5, **dadurch gekennzeichnet,** daß die Düse (23) durch eine Feder (25) aus der Einspritzstellung verschiebbar ist.

7. Maschine nach einem der Ansprüche 3 bis 6, **dadurch gekennzeichnet,** daß die Düse (23) in der Einspritzstellung durch eine Öffnung (28) in der Wandung (15) der Dampfkammer (20) ragt.

8. Maschine nach Anspruch 7, **dadurch gekennzeichnet,** daß die Öffnung (28) durch eine Dichtung (29) verschließbar ist.

9. Maschine nach Anspruch 8, **dadurch gekennzeichnet,** daß die Dichtung durch einen die Öffnung (28) überspannenden, geschlitzten und in Einspritzstellung der Düse (23) aufklaffenden Vorhang (29) aus elastischem Material gebildet ist.

10. Maschine nach einem der Ansprüche 1 bis 9, **dadurch gekennzeichnet,** daß unterhalb des Wärmespeichers (18) eine Reinigungsöffnung (31) vorgesehen ist.

11. Maschine nach Anspruch 10, **dadurch gekennzeichnet,** daß die Reinigungsöffnung (31) durch einen lösbaren Auffangbehälter (33) verschlossen ist.

12. Maschine nach einem der Ansprüche 1 bis 11, **dadurch gekennzeichnet,** daß ein zusätzlicher Wärmetauscher (30) zur Erzeugung von Heißdampf vorgesehen ist.

13. Maschine nach Anspruch 12, **dadurch gekennzeichnet,** daß der zusätzliche Wärmetauscher (30) in der Wandung der Dampfkammer (20) vorgesehen ist und mit dem .Wärmespeicher (18) in wärmeübertragender Verbindung steht.

14. Maschine nach einem der Ansprüche 1 bis 13, **dadurch gekennzeichnet,** daß die Einspritzeinrichtung (21) derart auf den Wasserdruck abgestimmt ist, daß die Wassereinspritzung in feinverteilten, schnellen Tröpfchen erfolgt.

FIG.1

FIG.2